Europäisches Patentamt

European Patent Office

Office européen des brevets

(19)

(11) Publication number: **0 313 405**
**A1**

## (12) EUROPEAN PATENT APPLICATION

(21) Application number: **88309955.8**

(22) Date of filing: **21.10.88**

(51) Int. Cl.⁴: **H 01 M 2/34**
**H 01 M 2/20**

(30) Priority: **22.10.87 US 97577**

(43) Date of publication of application:
**26.04.89 Bulletin 89/17**

(84) Designated Contracting States: **DE FR GB**

(71) Applicant: **EVEREADY BATTERY COMPANY, INC.**
**Checkerboard Square**
**St. Louis Missouri 63164 (US)**

(72) Inventor: **Biegger, Dennis W.**
**36633 Westfield Drive**
**North Ridgeville OH 44039 (US)**

(74) Representative: **Tubby, David George et al**
**MARKS & CLERK 57-60 Lincoln's Inn Fields**
**London WC2A 3LS (GB)**

(54) Battery terminal fuse.

(57) An electrochemical cell employing a conductive tab (2) to provide an electronic path between a terminal of the cell and one of the active materials of the cell and wherein said conductive tab has a narrow strip portion (6) which breaks when the current to the terminal exceeds a predetermined level is provided.

FIG.1.

## Description

## BATTERY TERMINAL FUSE

The present invention relates to a battery terminal fuse adapted to break or fuse when the current to the terminal exceeds a predetermined level.

The galvanic cell has become a primary power source for many portable electronic devices such as tape recorders, portable telephones, lanterns, radios, hearing aids, watches, calculators and the like. In order to maintain the devices as compact as possible. they are usually designed with cavities to accommodate batteries as the power source. The cavities are usually made so that a battery can be snugly positioned therein, thus making electronic contact with appropriate terminals within the device.

To accommodate this the battery industry has adapted several conventional size cells upon which the manufacturers can rely when designing their devices. Due to the large number of battery-powered devices on the market, there has been a demand for increased power output capacities of standard size cells. Accordingly various cell constructions have been employed so as to provide a sufficient output capacity to operate various devices. A problem has been encountered, however, when the cell is short-circuited or discharged under abuse conditions, producing large current flows which may result in a high temperature rise in the cell. The elevated temperature can also produce excessive pressure build-up which, independently or together with the temperature increase, can provide an environment within the cell inductive for an uncontrollable explosion to occur, or to cause rupture of the cell's housing.

Various means have been employed in or on a cell to prevent excessive current flow, such as would result from a short-circuit. Many of these means require mechanical and/or electrical components to be assembled in or on the cell to break the current, once the current exceeds a pre-determined level. These means have the disadvantage of adding cost to the production of the cell and, in some instances, occupying space that could be used for active materials.

U.S. Patent 4,188,460 discloses a battery employing an internal fuse comprising a portion of a current collector thermally shielded so that excessive build-up of heat resulting from a short circuit is concentrated in and fuses the shielded portion, interrupting the circuit prior to excessive internal pressure conditions arising.

In a first aspect of the present invention, there is provided an electrochemical cell having a first terminal electronically connected to an active electrode material, characterised in that the connection is via a conductive tab having first and second portions contacting the terminal and the electrode material respectively and being integrally connected by a narrow neck, the neck being adapted to fuse above a pre-selected amperage to produce an open-circuit in the cell.

In an alternative aspect, the present invention provides an electrochemical cell comprising an active anode material and an active cathode material assembled in a housing, the housing having a first terminal of the cell insulated from a second terminal of the cell, the first terminal being in electronic contact with one of the active materials and the second terminal being in electronic contact with the other active material; a conductive tab providing an electronic path between the first terminal and the active material in electronic contact with it, the conductive tab comprising a first conductive portion integrally connected to the remaining portion of the conductive tab by a narrow conductive strip. the first conductive portion being secured to the first terminal and the remaining portion of the tab being in electronic contact with the active material, the width of the narrow strip being selected such that if the current in the cell exceeds a predetermined amperage, the strip burns and breaks the electronic path to the first terminal, thereby producing an open circuit in the cell.

The present invention provides a battery terminal fuse that is cost effective and occupies only a small space within the battery. Such a fuse also does not require to be thermally shielded.

"Conductive" and related terms are used herein in respect of electrical/electronic conductivity etc., unless otherwise specified.

The width of the narrow strip of the conductive tab according to the invention is selected so that a current above a predetermined amount will burn or fuse the strip in a manner similar to that of a conventional house fuse when the current exceeds its rated ampere capacity.

One end of the conductive tab is secured to one terminal of the cell and assembled such that all the current to the terminal is fed through the narrow strip of the conductive tab. The width of the narrow strip selected for breaking upon reaching a pre-determined current level will depend on the material selected and the thickness of the material employed. For cylindrical cells, the conductive tab may be a circular disc having an arcuate shaped groove extending substantially concentrically about the centre of the disc. In such a design, a central portion of the disc is integrally connected to the remaining portion of the disc by a narrow strip in which the edges of the narrow strip define the ends of the arcuate groove. The central area portion of the conductive tab can then be secured to a terminal of the cell, such as a terminal secured in a glass-to-metal seal on a cover for the cell. The outer portion of the conductive tab can be electronically connected to one end of an active material for the cell.

In such a design, all the current flow from the cell would have to flow through the narrow strip so, that by selecting the proper width of the strip, the narrow strip breaks once the current flow exceeds a predetermined amount.

For most applications, the width of a nickel strip is ideally between about 0.5 mm (0.02 inch) and about 2.0 mm (0.08 inch). To accommodate currents no higher than about 20 amperes, the width of a nickel strip is ideally between about 0.76 mm (0.03 inch) and about 1.78 mm (0.07 inch), preferably about 1.3 mm (0.05 inch). Generally the fuse time to break the strip will occur within about 5 seoonds. As stated above, the width of the strip will vary depending on the material selected and the thickness of the material.

An additional benefit of the above design for the conductive tab is that the central area is able to flex about the narrow width above and below the plane of the tab without effectively distorting the peripheral area of the tab. Thus the central area of the tab connected to the terminal can flex upon bulging of the cell without disturbing the electronic continuity of the cell.

The tab for use in this invention can be made of any conductive material such as nickel plated steel, nickel foil, aluminum and stainless steel or a non-conductive material coated with a conductive layer, such as plastic films (polyester) coated with a metallic layer or layer of conductive paint.

Generally, the tab should be circular in shape to be compatible with circular cells and relatively thin so that it can flex easily. For most applications, the circular tab is suitably between about 0.025 mm (0.001 inch) and about 0.25 mm (0.01 inch) thick and, more preferably, between about 0.05 mm and 0.13 mm (0.002 and 0.005 inch) thick. It is desirable that the tab be relatively thin so as to occupy only a small volume within the cell.

The conductive tab or battery terminal fuse of this invention is suited for all types of cell systems and all geometric shapes of cells. However, an ideal cell construction for use with the battery terminal fuse is a cell employing a coiled electrode assembly. A coiled electrode assembly typically comprises two electrode strips and a separator. One electrode strip acts as an anode/anode current collector and the other serves as a cathode/cathode current collector. The anode strip, cathode strip and separator are all made of flexible materials and are typically formed into strips and superimposed upon each other, one electrode overlapping the other, and the separator being interposed between the two electrode strips. This assembly is then wound to form the coiled electrode assembly ,which is preferably cylindrical in outer contour, with a central opening and whch preferably has at least the edge of one electrode strip protruding from the top or bottom of the electrode assembly. The central opening in the coiled electrode assembly is typically cylindrical, but may be of any other configuration, such as ellipsoid.

As used herein, the term "electrode strip" means an active electrode such as a solid anode or cathode of the cell, or an electrochemically inactive strip such as an anode collector or a cathode collector employed along with an active liquid, solid or gas anode, or cathode respectively.

In a preferred embodiment of the present invention, the cover is a circular disc insulated from the cell's container and used as one terminal for the cell. The cover may also employ a conventional glass-to-metal seal in which a conductive terminal within the glass seal is electronically connected to the conductive tab, thereby adapting the terminal for use as the electrode terminal for the cell. Other embodiments of the cover may also be used with this invention.

When using a coiled electrode assembly for the cell construction, the conductive tab is preferably circular to accommodate the contour of the coiled electrode assembly, the coiled electrode assembly having at least one electrode strip extending from the end of the assembly.

In the embodiment of the present invention employing a concentric arcuate groove, the conductive tab has at least one opening, preferably two or more equally spaced openings, disposed in the area between the peripheral edge of the tab and the arcuate groove. The opening is preferably defined by an inwardly projecting flange to contact the protruding edge of the electrode strip extending from the end of the assembly, thus providing numerous contact points between the conductive tab and the edge of the electrode strip. Preferably, three or more circular openings disposed concentrically about the concentric arcuate groove of the tab with each opening defined by an inwardly disposed flange provide a substantial number of contact points between the edge of the electrode strip and the conductive tab. More preferably, the conductive tab has four circular openings disposed concentrically about the arcuate groove at intervals of 90° to provide multiple contact points between the conductive tab and the edge of the electrode strip. Thus, if one of the electronic connections between the flange and the electrode strip breaks, there are still several contact points remaining to provide electronic continuity.

In an alternative embodiment of the present invention, the openings disposed in the area between the peripheral edge of the tab and the central area of tab may be replaced by inward protrusions such as dimples, these inward protrusions contacting the edge of the electrode strip and providing numerous contact points between the tab and the electrode strip.

The conductive tab of this invention can be used in many different types of cell systems such as aqueous (i.e., alkaline) or nonaqueous cell systems employing solid or liquid cathodes such as, for example, LeClanche dry cells, zinc chloride cells, alkaline-$MnO_2$ cells, nickel-cadmium cells, lead-acid cells and lithium nonaqueous cells. In cells employing a coiled electrode assembly in a lithium nonaqueous system, it may be preferable to make the lithium the outer wound electrode. The lithium electrode strip may be superimposed and overlayed on a cathode strip such as $MnO_2$, $CuO$, $CF_x$, $FeS_2$ or the like with a separator interposed between them. and then wound with the edge of either or both electrodes protruding from the coiled electrode assembly.

The separator for use in accordance with the invention may be selected from a number of ionically permeable materials such as polypropylene, felted glass fibers and coated papers.

Cathode current collectors suitable for use in the invention include sintered nickel or carbonaceous materials such as Teflon-bonded carbon. Anode current collectors suitable for use in accordance with the invention include nickel foil, stainless steel foil, expanded metal and perforated metal.

A cylindrical container and cover are used in a preferred embodiment of the invention and may be stainless steel, nickel-plated steel or other conductive material that will not corrode or otherwise deteriorate when in contact with the active cell components. Preferably, for nonaqueous systems, the container and cover are made of 304L type stainless steel.

Any insulating gasket member disposed between the cover and the container should be stable in the presence of the active components and discharge products and is suitably selected from such materials as nylon, polypropylene, polyethylene, polytetrafluorethylene, fluorinated ethylene-propylene polymer, ethylene copolymer with fluorinated ethylenepropylene, polyester, polychlorotrifluoroethylene and perfluoralkoxy polymer.

Anodes suitable for use in some embodiments of the present invention include lithium. calcium, magnesium sodium and zinc. Cathodes suitable for use in some embodiments of the invention include $MnO_2$. HgO, $Ag_2O$, CuO, $FeS_2$, $TiS_2$, $(CF_x)_n$ ($1.1 > x > 0$). $SOCl_2$, $(C_2F)_n$, $SO_2Cl_2$ and $SO_2$. Some preferred cell systems for use in accordance with this invention are shown in the Table below.

TABLE

| Anode | Cathode | Electrolyte |
|---|---|---|
| lithium | $MnO_2$ | organic |
| lithium | $SOCl_2$ | $LiAlCl_4$ in $SOCl_2$ |
| lithium | $(CF_x)_n$ | organic |
| zinc | $MnO_2$ | aqueous alkaline |
| cadmium | nickel hydroxide | aqueous alkaline |

When a lithium anode is used a lithium foil may be secured onto a metallic conductive foil or carrier (anode collector) such as nickel.

The present invention will now be further illustrated with reference to the accompanying drawings in which:

Figure 1 is a top plan view of a circular conductive tab for use in accordance with this invention;

Figure 2 is a sectional elevational view of the conductive tab of Figure 1;

Figure 3 is a partial sectional elevational view of a cell employing the circular conductive tab of Figure 1;

Figure 4 is a plan view of another embodiment of a circular conductive tab for use in accordance with this invention; and

Figure 5 is a sectional elevational view of the conductive tab of Figure 4.

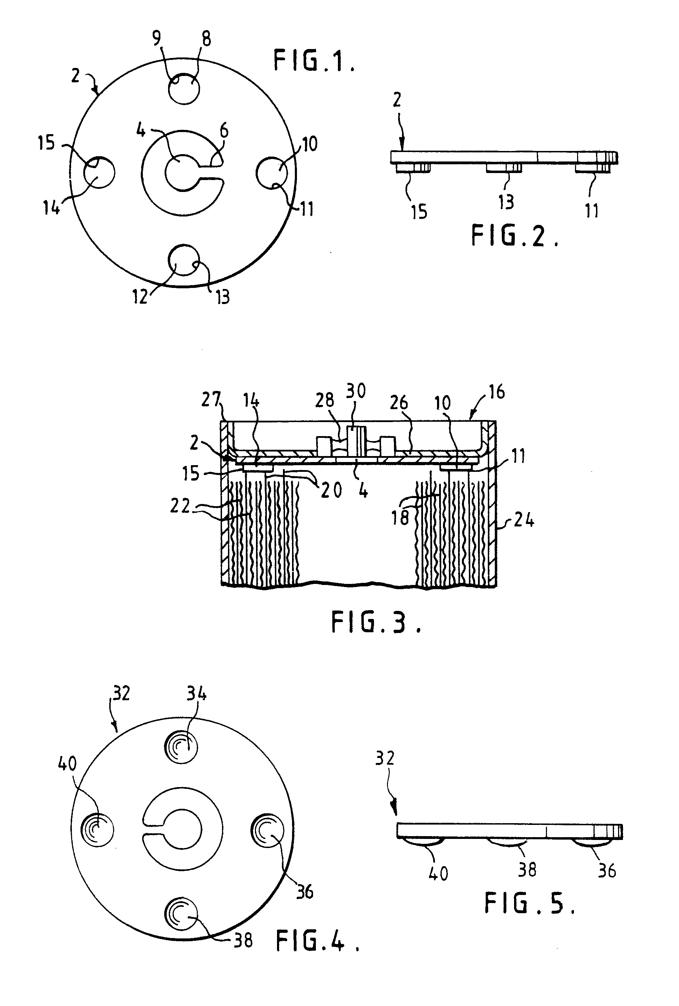

As shown in Figures 1 and 2, circular conductive tab 2 has a central area 4 integrally connected to the remainder of tab 2 by thin strip 6. As apparent from Figures 1 and 2, central area 4 can flex about strip 6 above or below the plane of tab 2. The design of the central area 4 produces a telescopic effect at the center of the tab 2. As discussed above, the width of strip 6 is selected to burn if a current is produced in the cell above a certain amount, breaking the electrical contact of the cell's circuit. Tab 2 also has four openings 8, 10, 12 and 14 spaced concentrically about the central area 4 at 90° intervals. Each opening has an extended flange which is designed to make pressure contact with an edge of electrode strip of a coiled electrode assembly. Each flange 9, 11, 13 and 15 defining each opening 8, 10, 12 and 14, respectively, may be secured to the edge of an electrode strip using conventional means.

Figure 3 shows a cross-section of a cell employing a coiled electrode assembly 16 comprising a first electrode strip 18, a second electrode strip 20 and a separator 22 therebetween, housed in container 24. The first electrode strip 18 and second electrode strip 20 are superimposed and overlapping such that upon being coiled the edge of electrode strip 20 projects above the coiled electrode assembly. Tab 2 of Figure 1 is shown in Figure 3, disposed over the projected edge of electrode strip 20 such that flanges 11 and 15 physically contact the edge of electrode strip 20. All the flanges 9, 11, 13 and 15 are welded using conventional welding means to electronically and physically connect and secure tab 2 to electrode strip 20. A cover 26 is shown disposed over container 24 and secured to container 24 at its edge 27 using welding or similar conventional means. The cover 26 has a glass-to-metal seal 28 with a centre terminal 30 which is secured to the centre area 4 of tab 2 using conventional welding techiques. As is apparent from Figure 3, if the cover 26 bulges, the central area 4 can flex without disturbing the electronic contact between the terminal and the electrode strip while, at the same time, if the current exceeds a predetermined amount, the narrow strip 6 shown in Figure I will break or fuse and create an open circuit in the cell before any damage is done to the cell and/or the device in which it is assembled.

Figure 4 and 5 show a circular conductive tab 32 similar to that shown in Figure 1 and 2, except that the openings 8-14 have been replaced with inward protrusions 34, 36, 38 and 40. These protrusion or dimples are designed to make phsical contact with the extending edge of an electrode strip in the same manner as the flanges 9, 11, 13 and 15 do in Figure 3.

Although preferred embodiments of this invention have been described in detail, modifications and changes may be made without departing from the spirit and scope of the invention.

**Claims**

1. An electrochemical cell having a first terminal electronically connected to an active electrode material, characterised in that the connection is via a conductive tab having first and second portions contacting the terminal and the electrode material respectively and being integrally connected by a narrow neck, the neck being adapted to fuse above a pre-selected amperage to produce an open-circuit in the cell.

2. A cell according to claim 1 wherein the electrode materials are assembled in a housing comprising a container closed with a cover forming the first terminal.

3. A cell according to claim 1 wherein the electrode materials are assembled in a housing comprising a container closed with a cover, the first terminal being secured within and through the cover by a glass-to-metal seal.

4. A cell according to claim 3 wherein the active electrode materials are in strip form and, together with a separator disposed between them, are rolled into a coiled electrode assembly, the edge of an electrode strip protruding from an end of the assembly to contact the tab.

5. A cell according to claim 4 wherein the tab has at least one opening between the central area and periphery of the tab, the opening having a dependent flange physically contacting the edge of the electrode strip extending from the coiled electrode assembly.

6. A cell according to claim 4 or 5 wherein the tab has at least one inward protrusion between the central area and periphery of the tab, the protrusion physically contacting the edge of the electrode strip extending from the coiled electrode assembly.

7. A cell according to any preceding claim wherein the active anode material is selected from the group consisting of lithium. sodium, calcium, magnesium and zinc.

8. A cell according to any preceding claim wherein the active cathode material is selected from the group consisting of $MnO_2$, $CuO$, $Ag_2O$, $FeS_2$, $TiS_2$, $(CF_x)_n$ (wherein $1> x >0$) and $(C_2F)_n$,

9. A cell according to any preceding claim employing an active cathode material selected from the group consisting of $SOCl_2$, $SO_2Cl_2$ and $SO_2$.

10. A cell according to any preceding claim employing an organic electrolyte and wherein the active anode material is lithium and the active cathode material is selected from the group consisting of $MnO_2$, $CuO$, $FeS_2$ and $TiS_2$.

11. A cell according to any preceding claim wherein the active cathode material is in electronic contact with carbonaceous material.

12. An electrochemical cell comprising an active anode material and an active cathode material assembled in a housing, said housing having a first terminal of the cell insulated from a second terminal of the cell and wherein said first terminal is in electronic contact with one of the active materials and said second terminal is in electronic contact with the other active material; a conductive tab providing an electronic path between said first terminal and the active material in electronic contact with said first terminal, said conductive tab comprising a first conductive portion integrally connected to the remaining portion of the conductive tab by a narrow conductive strip, said first conductive portion being secured to said first terminal and said remaining portion of the tab being in electronic contact with the active material, and wherein the width of the narrow strip is selected so that if the current in the cell exceeds a predetermined amperage, the strip will burn and break the electronic path to said first terminal thereby producing an open circuit in the cell.

EP 0 313 405 A1

FIG.1.

9  8

2

15

4   6

10

11

14

12   13

2

15   13   11

FIG.2.

27  14   28  30   26  10   16

2

11

15

22

20   4

18   24

FIG.3.

32

34

40

36

38

FIG.4.

32

40   38   36

FIG.5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | US-A-4 011 366  (R.J.BONES)<br>* Abstract; column 2, lines 3-39 *<br>--- | 1,2 | H 01 M    2/34<br>H 01 M    2/20 |
| D,X | FR-A-2 425 157  (P.R.MALLORY & CO.)<br>* Page 2, line 27 - page 3, line 22;<br>page 4, lines 32-39 *<br>--- | 1,2 | |
| Y | PATENT ABSTRACTS OF JAPAN, vol. 12, no.<br>20 (E-575)[2867], 21st January 1988; &<br>JP-A-62 177 869 (SHIN KOBE ELECTRIC<br>MACH CO LTD) 04-08-1987<br>* Abstract *<br>--- | 1,4 | |
| Y | IBM TECHNICAL DISCLOSURE BULLETIN, vol.<br>25, no. 8, January 1983, page 4081, New<br>York, US; J.J.BUTERA et al.:<br>"Overcurrent protection for aluminum<br>electrolytic capacitors"<br>* En entier *<br>--- | 1,4 | |
| P,X | US-A-4 767 682  (J.D.DOROGI)<br>* Column 9, lines 12-68 *<br>--- | 1,12 | TECHNICAL FIELDS SEARCHED (Int. Cl.4) |
| P,X | EP-A-0 271 086  (S.A.F.T.)<br>* Abstract; page 5, line 27 - page 6,<br>line 1 *<br>--- | 1,7,9,<br>11 | H 01 M    2/34<br>H 01 M    6/50<br>H 01 M    2/20<br>H 01 M    2/22 |
| A | DE-A-2 947 016<br>(SILBERKRAFT-LEICHTAKKUMULATOREN GmbH)<br>* Claim 5; page 6, lines 15-37 *<br>--- | 1,2,3 | H 01 M    2/26<br>H 01 M    6/10 |
| A | NAVY TECHNICAL DISCLOSURE BULLETIN,<br>vol. 3, no. 7, July 1978, Navy Case No.<br>62174, Navy Tech. Cat. No. 0710, pages<br>13-16; G.L.PETERSEN: "Lithium battery<br>fuse"<br>* The whole document *<br>---                              -/- | 1 | |

The present search report has been drawn up for all claims

| Place of search | Date of completion of the search | Examiner |
|---|---|---|
| THE HAGUE | 31-01-1989 | DE VOS L.A.R. |

EPO FORM 1503 03.82 (P0401)

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-3 319 371 (SIEMENS AG) <br> * Abstract; page 9, lines 6-29 * <br> --- | 1 | |
| A | DE-B-1 149 106 (DEUTSCHE BUNDESBAHN) <br> * The whole document * <br> ----- | 1 | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 31-01-1989 | DE VOS L.A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)